Europäisches Patentamt

European Patent Office

Office européen des brevets

(19)

(11)  **EP 1 214 607 B1**

(12)  **FASCICULE DE BREVET EUROPEEN**

(45) Date de publication et mention
de la délivrance du brevet:
**14.12.2005  Bulletin 2005/50**

(21) Numéro de dépôt: **00964348.7**

(22) Date de dépôt: **22.09.2000**

(51) Int Cl.⁷: $G01S\ 11/08$, $G01S\ 13/76$

(86) Numéro de dépôt international:
**PCT/FR2000/002627**

(87) Numéro de publication internationale:
**WO 2001/022116 (29.03.2001 Gazette 2001/13)**

(54) **PROCEDE ET DISPOSITIF POUR DETERMINER LA DUREE DE TRANSIT ENTRE UN ENGIN SPATIAL ET UNE STATION SOL**

VERFAHREN UND GERÄT ZUR BESTIMMUNG DER LAUFZEIT ZWISCHEN EINEM SATELLITE UND EINER ERDSTATION

METHOD AND DEVICE FOR DETERMINING TRANSIT TIME BETWEEN A SPACE CRAFT AND A GROUND STATION

(84) Etats contractants désignés:
**AT BE CH CY DE DK ES FI FR GB GR IE IT LI LU MC NL PT SE**

(30) Priorité: **24.09.1999  FR 9911942**

(43) Date de publication de la demande:
**19.06.2002  Bulletin 2002/25**

(73) Titulaire: **Centre National d'Etudes Spatiales ( C.N.E.S.)**
**75039 Paris Cedex 01 (FR)**

(72) Inventeur: **CARAYON, Jean-Louis**
**F-31450 Odars (FR)**

(74) Mandataire:
**Cabinet BARRE LAFORGUE & associés**
**95, rue des Amidonniers**
**31000 Toulouse (FR)**

(56) Documents cités:
**EP-A- 0 834 749          EP-A- 0 860 710**
**US-A- 4 161 730          US-A- 5 712 867**

EP 1 214 607 B1

## EP 1 214 607 B1

**Description**

L'invention concerne un procédé et un dispositif pour déterminer la durée de transit $\Delta T$ de signaux véhiculant des informations numériques entre une station sol équipée d'un système informatique, dit système sol, et un engin spatial tel qu'un satellite -notamment un microsatellite-, équipé d'un système informatique, dit système bord, émettant en permanence vers la station sol, successivement, des trames d'informations numériques sous forme de bits, dites trames de télémesure TM, de taille fixe prédéterminée, chaque trame de télémesure TM comprenant un numéro de trame permettant de l'identifier. Dans la suite, un engin spatial est qualifié de "communiquant par télémesure" lorsqu'il émet des trames de télémesure comme indiqué ci-dessus.

Les logiciels et systèmes de navigation -notamment d'orbitographie- nécessitent de pouvoir déterminer la position et la vitesse d'un engin spatial tel qu'un satellite artificiel par rapport au sol. Dans tout le texte, on désigne par "sol" tout site de référence sur lequel est placée la station avec laquelle l'engin spatial communique par télémesure. Il s'agit en particulier du sol terrestre lorsque l'engin spatial est un satellite artificiel terrestre. Mais, il peut aussi s'agir d'une autre planète ou même d'un autre engin spatial.

La technique la plus couramment employée jusqu'à maintenant pour ce faire pour les satellites en orbite basse, normalisée par l'Agence Spatiale Européenne, est basée sur une mesure d'effet Doppler et des mesures de distance utilisant la porteuse à haute-fréquence modulée par des tons spécifiques. Cette technique a l'avantage d'être relativement précise, mais nécessite l'installation à bord de l'engin spatial, d'un transpondeur spatial, qui est un équipement complexe, coûteux et consommateur d'énergie. En outre, cette technique suppose l'emploi de systèmes -notamment un système de tons-complexes et coûteux au niveau de la station sol.

Il est aussi possible d'utiliser un récepteur GPS (Global Positioning System) utilisant des signaux reçus d'une constellation de satellites placés en orbite (20 000 km). Mais, là encore, un tel récepteur GPS est cher, complexe, et constitue un équipement complémentaire consommateur d'énergie à bord de l'engin spatial. En outre, l'emploi d'un récepteur GPS n'est plus possible pour les engins spatiaux pouvant être placés ou voyager au-delà de la constellation de satellites GPS, par exemple les satellites en orbite haute géostationnaire (36 000 km).

Un autre problème qui se pose est celui du calage précis des horloges de bord de l'engin spatial par rapport au temps universel terrestre. Ce problème peut être résolu avec un récepteur GPS embarqué, avec les inconvénients sus-mentionnés, qui permet d'obtenir une précision de l'ordre de la microseconde. Il n'est par ailleurs pas raisonnablement possible d'équiper l'engin spatial d'une horloge atomique, encombrante, lourde et coûteuse.

Ces problèmes se posent de façon plus particulière d'une part pour les satellites -notamment les microsatellites- en orbite basse (de l'ordre de 1 000 km) par exemple à des fins d'observations terrestres ou dans le cadre de constellations de microsatellites à des fins de télédiffusion ou de télécommunication pour lesquels les critères de coût sont prépondérants, et d'autre part pour les engins spatiaux de petites tailles et/ou faibles prix, tels que les sondes spatiales, destinés à voyager à longue distance de la terre -notamment au-delà de la constellation de satellites GPS-.

L'invention vise donc à pallier ces inconvénients en proposant un procédé et un dispositif permettant de calculer la distance et la vitesse radiale par rapport à une station sol d'un engin spatial communicant par télémesure avec cette station sol, et/ou permettant de caler le(s) horloge(s) à bord de l'engin spatial sur le temps universel du sol, sans nécessiter d'équipement spécifique lourd, et/ou complexe et/ou coûteux et/ou consommateur d'énergie à bord de l'engin spatial.

L'invention vise en particulier à éviter l'emploi d'un récepteur GPS ou d'un transporteur, à bord d'un engin spatial.

L'invention vise plus particulièrement à proposer un tel procédé et un tel dispositif destinés à un engin spatial de petites dimensions et/ou de faible prix tel qu'un microsatellite en orbite basse ou une sonde d'exploration spatiale.

L'altitude d'un engin spatial peut être obtenue notamment par un calcul précis de la durée de transit $\Delta T$ des signaux véhiculant les informations entre cet engin spatial et le sol. De même, une référence de temps universel de sol (notamment du temps universel terrestre) peut être envoyée à bord de l'engin spatial et utilisée pour le calage des horloges de bord si le système bord dispose aussi d'une mesure précise de la durée de transit de cette référence de temps universel terrestre.

L'invention vise donc de façon plus générale à permettre de déterminer avec précision la durée de transit $\Delta T$ des signaux (ondes électromagnétiques ou transmission optique) véhiculant des informations numériques entre le sol et l'engin spatial, et ce sans nécessiter d'équipement spécifique lourd et/ou complexe et/ou coûteux et/ou consommateur d'énergie tel qu'un transpondeur ou un récepteur GPS à bord de l'engin spatial.

L'invention vise plus particulièrement à permettre cette détermination à bord de l'engin spatial.

L'invention vise en particulier à permettre cette détermination avec une précision suffisante compatible avec la vitesse radiale de déplacement de l'engin spatial par rapport au sol. L'invention vise aussi à permettre cette détermination avec une précision compatible avec les contraintes imposées par les logiciels et systèmes de navigation -notamment les systèmes d'orbitographie embarqués-.

L'invention vise en particulier à permettre cette détermination avec une précision de l'ordre de 100ns à 10 $\mu$s.

Pour ce faire, l'invention concerne un procédé pour déterminer la durée de transit $\Delta T$ de signaux véhiculant des informations numériques entre une station sol équipée d'un système informatique, dit système sol et un engin spatial équipé d'un système informatique, dit système bord, procédé dans lequel on émet en permanence successivement des trames d'informations numériques sous forme de bits, dites trames de télémesure TM, de taille fixe prédéterminée, de l'engin spatial vers la station sol, chaque trame de télémesure comprenant un numéro de trame, caractérisé en ce que :

-   on mesure le temps dans la station sol, dit temps sol, avec un signal d'horloge de fréquence au moins égale à 10 MHz,
-   on mesure le temps à bord de l'engin spatial, dit temps bord, avec un signal d'horloge de fréquence au moins égale à 10 MHz,
-   on génère dans le système sol et on émet de la station sol vers l'engin spatial, une trame d'informations numériques sous forme de bits, dite trame de synchronisation TC-Dist, comprenant au moins un bit en bande de base, dit bit de synchronisation,
-   on mesure et on enregistre dans la station sol l'intervalle de temps sol $\Delta tsol$ écoulé entre l'instant d'émission du bit de synchronisation et l'instant de réception d'un bit en bande de base, dit bit de référence, d'une trame de télémesure reçue préalablement par le système sol, et on enregistre le numéro de trame NTs de cette trame de télémesure,
-   on génère et on émet vers l'engin spatial une trame d'informations numériques sous forme de bits, dite trame de mesure TC-mes, depuis la station sol, incorporant l'intervalle de temps sol $\Delta tsol$ et le numéro de trame NTs de la trame de télémesure comprenant le bit de référence,
-   on mesure à bord de l'engin spatial l'intervalle de temps bord $\Delta tbord$ écoulé entre la réception du bit de synchronisation par le système bord, et l'émission par le système bord du bit de référence d'une trame de télémesure dont le numéro de trame NTb est enregistré,
-   on reçoit et on enregistre à bord de l'engin spatial l'intervalle de temps sol $\Delta tsol$ et le numéro de trame de trame NTs contenus dans la trame de mesure TC-mes,
-   on calcule la durée de transit $\Delta T$ par la formule :

$$2\Delta T = \Delta tbord - \Delta tsol + (NTb - NTs) \times d\ trame$$

$$- biais\ (sol) - biais\ (bord) - bruit\ (sol) - bruit\ (bord)$$

où :

-   d trame est la durée totale, mesurée en temps bord, de l'émission de chaque trame de télémesure,
-   biais (sol) et biais (bord) sont des délais induits par les émetteurs et récepteurs des ondes électromagnétiques dans la station sol et, respectivement, dans l'engin spatial,
-   bruit (sol) et bruit (bord) sont des bruits de phase de restitution des horloges de bits des trames à l'émission et à la réception, dans la station sol et, respectivement, dans l'engin spatial.

Selon l'invention, la durée de transit $\Delta T$ est calculée par une corrélation d'informations de nature numérique (bits en bande de base) intégrées dans les trames de télémesure et dans la trame de mesure. Ainsi, bien que la durée de transit AT soit une caractéristique relative à une grandeur physique analogique (les ondes électromagnétiques véhiculant l'information), et contrairement au préjugé de l'art antérieur, il a été constaté qu'une excellente précision, compatible avec la précision requise dans la plupart des applications, en particulier avec les contraintes imposées par les logiciels de navigation -notamment d'orbitographie- peut être obtenue en se basant sur les bits en bande de base.
Avantageusement et selon l'invention, on mesure le temps bord $\Delta tbord$ à bord de l'engin spatial et on calcule la durée de transit $\Delta T$ par le système bord, à bord de l'engin spatial, de sorte que la valeur $\Delta T$ est connue à bord de l'engin spatial. Cette valeur est ainsi connue à bord de l'engin spatial de façon simple et rapide, sans nécessiter de multiples échanges avec le sol.
Avantageusement et selon l'invention, la trame de mesure TC-mes incorpore en outre la date absolue TUsol d'émission au sol du bit de synchronisation et on cale le temps bord absolu TUbord à partir de la date absolue TUsol et de la durée de transit $\Delta T$ calculée.
Avantageusement et selon l'invention, on calcule la distance D entre la station sol et l'engin spatial à l'aide de la durée de transit $\Delta T$. Ce calcul peut être effectué avec la vitesse des ondes dans l'espace entre l'engin spatial et la station sol qui peut être considérée comme égale à la vitesse de la lumière pour les précisions recherchées.
Avantageusement et selon l'invention, on émet des trames d'informations numériques sous forme de bits,

EP 1 214 607 B1

dites trames de télécommande TC, de la station sol vers l'engin spatial selon un protocole prédéterminé reconnu par le système bord, et la trame de synchronisation constitue une trame de télécommande ou est incorporée dans une trame de télécommande TC. Ainsi, la trame de synchronisation n'est en fait que l'une des trames de télécommande particulière ou une partie d'une telle trame de télécommande particulière. Le système bord peut être aisément doté de moyens permettant de détecter cette télécommande particulière parmi les différentes télécommandes, par exemple un corrélateur de profil de trame. Avantageusement et selon l'invention, les trames de télémesure TM et les trames de télécommande TC sont conformes au protocole standard CCSDS (Comité Consultatif pour les Systèmes de Données Spatiales).

Avantageusement et selon l'invention, le bit de référence d'une trame de télémesure est le premier bit de cette trame de télémesure suivant un mot, dit mot de synchronisation, intercalé entre les trames de télémesure. De même, avantageusement et selon l'invention, le bit de synchronisation est le premier bit de la trame de synchronisation suivant un mot de synchronisation permettant au système bord de reconnaître les trames de télécommande. Il est à noter cependant qu'en variante, tout autre bit particulier peut être choisi pour le bit de référence et/ou pour le bit de synchronisation à condition de pouvoir être repéré et identifié dans la trame correspondante.

Avantageusement et selon l'invention, la trame de mesure TC-mes est distincte de la trame de synchronisation TC-Dist et est émise immédiatement à la suite de la trame de synchronisation TC-Dist. En variante, les deux trames peuvent être confondues, les informations $\Delta$tsol, NTs et, le cas échéant, TUsol, étant intégrées dans la même trame que le bit de synchronisation, après ce bit de synchronisation.

Par ailleurs, avantageusement et selon l'invention, la trame de synchronisation TC-Dist incorpore un champ identifiant un numéro de trame de synchronisation TC-Dist fourni par un compteur du système sol. De la sorte, on évite toute éventuelle ambiguïté dans la détection et l'identification des trames de synchronisation par le système bord.

Avantageusement et selon l'invention, la trame de télémesure de numéro NTs comprenant le bit de référence permettant de calculer l'intervalle de temps sol $\Delta$tsol est la trame de télémesure en cours de réception par le système sol lors de l'émission du bit de synchronisation. De même, avantageusement et selon l'invention, la trame de télémesure de numéro NTb comprenant le bit de référence permettant de calculer l'intervalle de temps bord $\Delta$tbord est la trame de télémesure en cours d'émission par le système bord lors de la réception de la trame de synchronisation TC-Dist par le système bord.

Par ailleurs, avantageusement et selon l'invention, on mesure le temps sol avec un signal d'horloge issu d'une horloge atomique, ou en variante, avec un signal d'horloge issu d'un récepteur d'un système GPS de positionnement à partir d'une constellation de satellites. Par contre, avantageusement et selon l'invention, on mesure le temps bord avec un signal d'horloge issu d'un oscillateur embarqué distinct d'une horloge atomique et d'un récepteur d'un système GPS de positionnement à partir d'une constellation de satellites. De la sorte, l'engin spatial n'a pas à incorporer d'horloge atomique ni de récepteur GPS.

L'invention s'étend à un dispositif de mise en oeuvre d'un procédé selon l'invention.

L'invention concerne donc un dispositif pour déterminer la durée de transit $\Delta$T de signaux véhiculant des informations numériques entre une station sol équipée d'un système informatique, dit système sol, et un engin spatial équipé d'un système informatique, dit système bord, dans lequel le système bord est adapté pour émettre en permanence successivement des trames d'informations numériques sous forme de bits, dites trames de télémesure TM, de taille fixe prédéterminée, de l'engin spatial vers la station sol, chaque trame de télémesure comprenant un numéro de trame, caractérisé en ce qu'il comprend :

- dans le système sol, un signal d'horloge de fréquence au moins égale à 10 MHz, adapté pour mesurer le temps dans la station sol, dit temps sol,
- dans le système bord, un signal d'horloge de fréquence au moins égale à 10 MHz, adapté pour mesurer le temps à bord de l'engin spatial, dit temps bord,
- dans le système sol, des moyens adaptés pour générer et émettre vers l'engin spatial une trame d'informations numériques sous forme de bits, dite trame de synchronisation TC-Dist, comprenant au moins un bit en bande de base, dit bit de synchronisation,
- dans la station sol, des moyens pour mesurer et enregistrer l'intervalle de temps sol $\Delta$tsol écoulé entre l'instant d'émission du bit de synchronisation et l'instant de réception d'un bit en bande de base, dit bit de référence, d'une trame de télémesure reçue préalablement par le système sol, et des moyens pour enregistrer le numéro de trame NTs de cette trame de télémesure,
- dans le système sol, des moyens adaptés pour générer et émettre vers l'engin spatial une trame d'informations numériques sous forme de bits, dite trame de mesure TC-mes, incorporant l'intervalle de temps sol $\Delta$tsol et le numéro de trame NTs de la trame de télémesure comprenant le bit de référence,
- à bord de l'engin spatial, des moyens pour mesurer l'intervalle de temps bord $\Delta$tbord écoulé entre la réception du bit de synchronisation par le système bord, et l'émission par le système bord du bit de référence d'une trame de télémesure dont le numéro de trame NTb est enregistré,

- des moyens pour recevoir et enregistrer à bord de l'engin spatial l'intervalle de temps sol Δtsol et le numéro de trame NTs contenus dans la trame de mesure TC-mes,
- des moyens pour calculer la durée de transit ΔT par la formule :

$$2\Delta T = \Delta tbord - \Delta tsol + (NTb - NTs) \times d\ trame$$

$$- biais\ (sol) - biais\ (bord) - bruit\ (sol) - bruit\ (bord)$$

où :

- d trame est la durée totale, mesurée en temps bord, de l'émission d'une trame de télémesure,
- biais (sol) et biais (bord) sont des délais induits par les émetteurs et récepteurs des ondes électromagnétiques dans la station sol et, respectivement, dans l'engin spatial,
- bruit (sol) et bruit (bord) sont des bruits de phase de restitution des horloges de bits des trames à l'émission et à la réception, dans la station sol et, respectivement, dans l'engin spatial.

Avantageusement et selon l'invention, le système bord est adapté pour mesurer l'intervalle de temps bord Δtbord et pour calculer la durée de transit ΔT, de sorte que cette valeur ΔT est connue à bord de l'engin spatial.

Avantageusement et selon l'invention, le système sol est adapté pour incorporer dans la trame de mesure TC-mes la date absolue $TU_{sol}$ d'émission au sol du bit de synchronisation, et le système bord est adapté pour caler le temps bord absolu à partir de la date absolue TUsol et de la durée de transit ΔT calculée.

Avantageusement, un dispositif selon l'invention comprend des moyens pour calculer la distance D entre la station sol et l'engin spatial à l'aide de la durée de transit ΔT calculée.

Avantageusement et selon l'invention, le système sol est adapté pour émettre des trames d'informations numériques sous forme de bits, dites trames de télécommande TC, vers l'engin spatial selon un protocole prédéterminé reconnu par le système bord, et pour former la trame de synchronisation TC-Dist en tant que trame de télécommande ou l'incorporer dans une trame de télécommande TC. Ainsi, au moins une trame de télécommande émise comprend la trame de synchronisation TC-Dist ou est formée de cette trame de synchronisation TC-Dist. Avantageusement, un dispositif selon l'invention est adapté pour que les trames de télémesure TM et les trames de télécommande TC soient conformes au protocole CCSDS.

Par ailleurs, avantageusement et selon l'invention, le système sol comprend un compteur de trame de synchronisation TC-Dist délivrant un numéro de trame de synchronisation TC-Dist incorporé dans un champ de la trame de synchronisation TC-Dist.

Avantageusement et selon l'invention, la trame de mesure TC-mes est distincte de la trame de synchronisation TC-Dist, et le système sol est adapté pour émettre la trame de mesure TC-mes immédiatement à la suite de la trame de synchronisation TC-Dist. En variante, ces deux trames sont confondues.

Avantageusement et selon l'invention, le système sol comprend une horloge atomique, ou, en variante, des moyens pour délivrer un signal d'horloge à partir d'informations reçues par un récepteur de système GPS de positionnement à partir d'une constellation de satellites.

Avantageusement et selon l'invention, le système bord comprend un oscillateur embarqué distinct d'une horloge atomique et d'un récepteur de système GPS de positionnement à partir d'une constellation de satellites.

L'invention permet ainsi de déterminer la durée de transit ΔT avec une précision suffisante (par exemple jusqu'à 100ns, typiquement de l'ordre de quelques microsecondes pour les rythmes de bits de télécommande de l'ordre de 10 kbits/s) -notamment pour le cas des microsatellites et/ou pour les engins spatiaux de petites dimensions-, de façon extrêmement simple, peu coûteuse à l'investissement, à l'intégration, et en termes de poids et d'encombrement.

L'invention concerne aussi un procédé et un dispositif caractérisés en combinaison par tout ou partie des caractéristiques mentionnées ci-dessus ou ci-après.

D'autres buts, caractéristiques et avantages de l'invention apparaîtront à la lecture de la description suivante qui se réfère aux figures annexées dans lesquelles :

- la figure 1 est un schéma illustrant un engin spatial communiquant avec une station sol dans lesquels l'invention peut être appliquée,
- la figure 2 est un schéma fonctionnel général de moyens assurant la communication entre un engin spatial et une station sol auxquels l'invention peut être appliquée,
- la figure 3 est un schéma fonctionnel d'un dispositif et d'un procédé selon l'invention,
- la figure 4 est un exemple de diagramme temporel illustrant l'enchaînement des signaux logiques dans le système sol dans un procédé selon l'invention,

- la figure 5 est un exemple de diagramme temporel illustrant l'enchaînement des signaux logiques dans le système bord dans un procédé selon l'invention,
- la figure 6 est un schéma synoptique illustrant l'architecture globale d'un calculateur d'un système bord d'un dispositif selon l'invention,
- la figure 7 est un schéma synoptique illustrant un principe de corrélation pour le calage du temps bord absolu par le système bord dans un procédé et un dispositif selon l'invention.

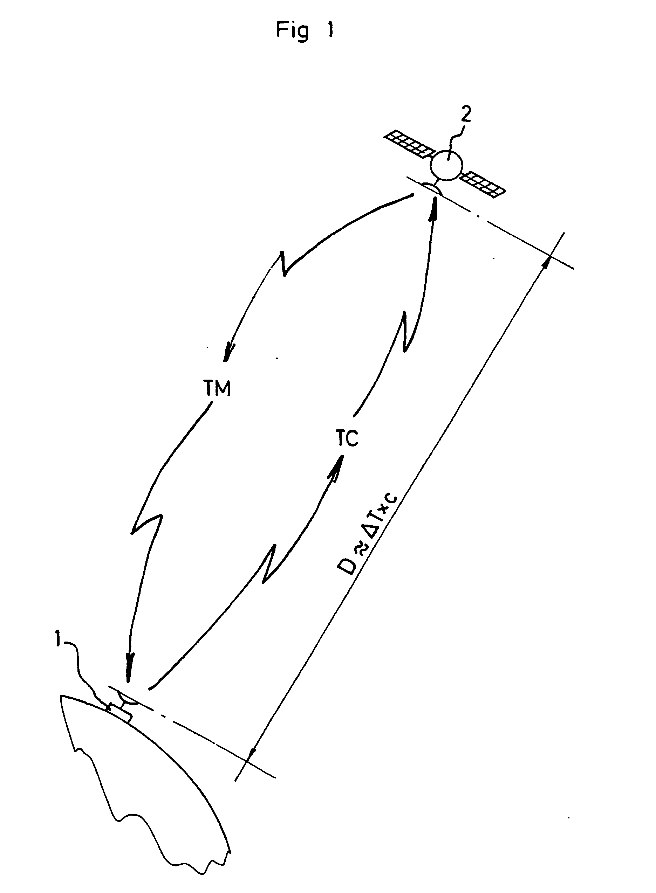

La figure 1 représente un exemple d'application de l'invention pour la détermination de la durée de transit $\Delta T$ des informations numériques transmises par ondes électromagnétiques entre une station sol terrestre 1 et un engin spatial 2 qui, dans l'exemple représenté, est un satellite -notamment un microsatellite- destiné à évoluer en orbite basse.

La station sol 1 est adaptée pour pouvoir émettre des trames d'informations numériques, dites trames de télécommande TC, à destination de l'engin spatial 2. L'engin spatial 2 émet en permanence successivement des trames d'informations numériques, dites trames de télémesure TM à destination de la station sol 1. Les trames de télémesure TM sont des trames synchrones de taille fixe prédéterminée formées de trains ou de paquets de bits, comprenant notamment des images, des données recueillies par l'engin spatial 2. Les trames de télémesure sont séparées deux à deux par un mot de synchronisation... A l'inverse, il est à noter que les trames de télécommande TC ne sont pas des trames synchrones répétitives, mais sont formatées comme les données véhiculées par une liaison série traditionnelle, avec un entête, des données de synchronisation initiale (mot de synchronisation)... Chaque trame de télécommande est constituée d'un train de bits codés (notamment suivant le standard CCSDS), précédé d'un mot de synchronisation permettant au bord de détecter le début de la télécommande. Le profil de bit lui-même est protégé contre les erreurs de transmission par un code correcteur d'erreurs.

Un tel protocole de communication entre un engin spatial 2 et la station sol 1 est bien connu en lui-même, et est par exemple décrit dans le protocole standard CCSDS (Comité Consultatif pour les Systèmes de Données Spatiales, comme décrit par exemple par ESA PSS-04-107 Issue 2 April 1992 : Packet Telecommand standard et ESA PSS-04-104 April 1992 : Packet Telemetry Standard). Il est à noter cependant que l'invention est applicable et permet la détermination de durée de transit $\Delta T$ dès lors que l'engin spatial 2 émet successivement en permanence des trames de télémesure TM vers la station sol 1, et que ces trames de télémesure sont de taille fixe prédéterminée.

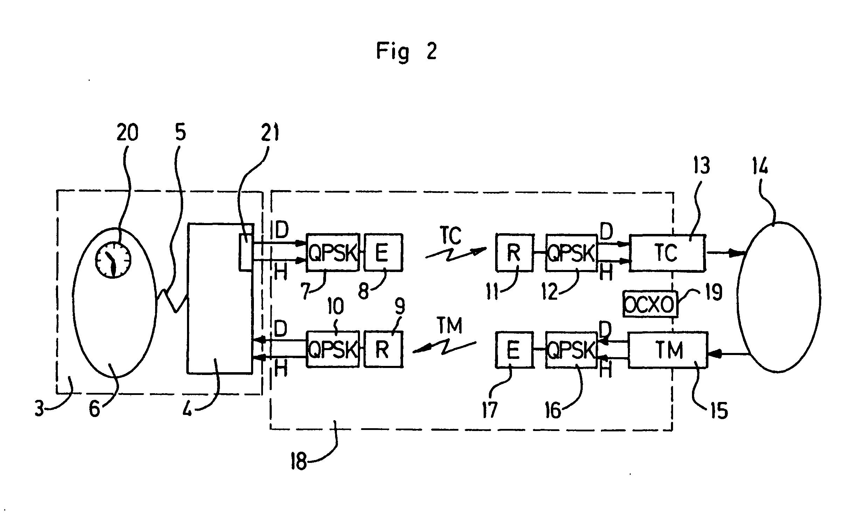

La figure 2 représente de façon plus précise le schéma fonctionnel de la communication entre l'engin spatial 2 et la station sol 1. La station sol 1 comprend un système informatique, dit système sol 3 comprenant un centre de contrôle 6, qui reçoit et émet les données de communication avec l'engin spatial 2. De façon traditionnelle, les informations numériques émises ou reçues par le système sol 3 transitent par l'intermédiaire d'une interface bande de base 4 qui communique avec le centre de contrôle 6 par l'intermédiaire d'un réseau 5 informatique sur lequel les données numériques sont véhiculées par paquets par un protocole asynchrone. L'interface 4 bande de base fournit un signal d'horloge H et un signal de données D sous forme de bits à un modulateur 7 qui est par exemple de type QPSK ("Quadrature Phase Shift Keying") qui module le signal, et le délivre à un émetteur 8 d'ondes électromagnétiques.

A la réception, les signaux sont reçus par un récepteur 9 qui fournit le signal à un démodulateur 10 qui est également par exemple un démodulateur QPSK, qui délivre le signal d'horloge H et les données D sous forme de bits numériques à l'interface bande de base 4.

Du côté de l'engin spatial 2, il est également prévu un récepteur 11 fournissant le signal 1 à un démodulateur QPSK 12 qui délivre le signal d'horloge H et le signal de données D et le fournit à un décodeur 13 de télécommande délivrant des informations numériques sous forme de paquets, en protocole asynchrone au système informatique, dit système bord 14 de l'engin spatial 2. De façon semblable, ce système bord 14 fournit les données de télémesure à un codeur de télémesure 15 qui formate les signaux de données D et le signal d'horloge H et les délivrent à un modulateur QPSK 16 délivrant le signaux à un émetteur 17.

La durée de transit $\Delta T$ à déterminer est celle qui est mise par les informations numériques entre chaque émetteur 8, 17 et le récepteur 9, 11 correspondant. Il s'agit donc exactement de la durée de voyage des ondes électromagnétiques entre la station sol 1 et l'engin spatial 2.

Sur la figure 2, on a représenté en pointillés l'espace 18 dans lequel les informations sont véhiculées sous forme de bits de façon synchrone. Dans le système sol 3 et le système bord 14, les informations sont véhiculées sous forme asynchrone par paquets.

Le système bord 14 comprend un oscillateur 19 qui délivre un signal d'horloge de fréquence au moins égale à 10 MHz qui fournit tous les signaux d'horloge du système bord 14. Cet oscillateur 19 est de type OCXO ("Oven Controlled Crystal Oscillator"), c'est-à-dire un oscillateur à quartz thermostaté qui permet d'atteindre une stabilité relative de l'ordre de 10-10 pour la fréquence de 10 MHz produite. Ceci permet, avec un calage périodique chaque jour du bord à chaque visibilité du sol, de garder une heure bord calée sur le temps universel du sol avec une précision de l'ordre de la milliseconde.

Comme représenté schématiquement figure 1, pour permettre la détermination de la durée de transit $\Delta T$, les chaînes émission et réception de la station sol 1 et de l'engin spatial 2 sont actives simultanément.

Le système sol 3 comprend également une horloge atomique 20 ou un récepteur de système GPS de positionnement à partir d'une constellation de satellites permettant de délivrer un signal d'horloge de fréquence au moins égale à 10 MHz.

Dans un procédé selon l'invention :

- on génère dans le système sol 3 et on émet de la station sol 1 vers l'engin spatial 2, une trame d'informations numériques sous forme de bits, dite trame de synchronisation TC-Dist, comprenant au moins un bit en bande de base, dit bit de synchronisation,
- on mesure et on enregistre dans la station sol 1 l'intervalle de temps sol $\Delta$tsol écoulé entre l'instant d'émission du bit de synchronisation et l'instant de réception d'un bit en bande de base, dit bit de référence, d'une trame de télémesure reçue préalablement par le système sol 3, et on enregistre le numéro de trame NTs de cette trame de télémesure,
- on génère et on émet vers l'engin spatial 2 une trame d'informations numériques sous forme de bits, dite trame de mesure TC-mes, depuis la station sol 1, incorporant l'intervalle de temps sol $\Delta$tsol et le numéro de trame NTs de la trame de télémesure comprenant le bit de référence,
- on mesure à bord de l'engin spatial 2 l'intervalle de temps bord $\Delta$tbord écoulé entre la réception du bit de synchronisation par le système bord 14, et l'émission par le système bord 14 du bit de référence d'une trame de télémesure dont le numéro de trame NTb est enregistré,
- on reçoit et on enregistre à bord de l'engin spatial 2 l'intervalle de temps sol $\Delta$tsol et le numéro de trame de trame NTs contenus dans la trame de mesure TC-mes,
- on calcule la durée de transit $\Delta$T par la formule :

$$2\Delta T = \Delta tbord - \Delta tsol + (NTb - NTs) \times d \text{ trame}$$

$$- \text{ biais (sol) - biais (bord) - bruit (sol) - bruit (bord)}$$

où :

- d trame est la durée totale, mesurée en temps bord, de l'émission d'une trame de télémesure,
- biais (sol) et biais (bord) sont des délais induits par les émetteurs et récepteurs des ondes électromagnétiques dans la station sol 1 et, respectivement, dans l'engin spatial 2,
- bruit (sol) et bruit (bord) sont des bruits de phase de restitution des horloges de bits des trames à l'émission et à la réception, dans la station sol 1 et, respectivement, dans l'engin spatial 2.

Il est à noter de surcroît que chaque trame de télémesure comprend un numéro de trame explicitement inscrit dans la trame elle-même.

Les biais (sol) et biais (bord) de la formule précédente sont dus au temps de propagation (vitesse de propagation de groupe du signal numérique) dans les émetteurs et récepteurs de la chaîne bord et sol. Ces biais ont une valeur de l'ordre de quelques microsecondes et sont constants pour un équipement donné (affectés néanmoins d'une dérive à long terme), et peuvent être annulés par une calibration de la chaîne TM/TC avant le vol ou même pendant le vol (par corrélation avec une détermination d'orbite effectuée par d'autres moyens, par exemple par effet Doppler), en connaissant précisément la distance entre la station sol et l'engin spatial et en effectuant une mesure $\Delta$T dite de calibration.

Les bruits sont dus à la "gigue" du signal d'horloge (donc la position du bit de référence ou du bit de synchronisation) restitué par chacun des récepteurs sol et bord, et dépendent du type de démodulation de bit utilisée. En pratique, ces bruits dépendent du rythme de bits utilisé (dans un rapport de l'ordre de 1/1000 de ce rythme de bits et sont de l'ordre de 0,4 microseconde pour le récepteur sol démodulant un rythme de télémesure de 400kbits/s, et de l'ordre de 3 microsecondes pour le récepteur bord utilisé à bord de l'engin spatial à 20kbits/s. La mesure de chacun des $\Delta$tbord et $\Delta$tsol a une précision de 100 nanosecondes car on compte les cycles d'horloges à 10MHz pour effectuer ces mesures.

La précision de mesure de la durée de transit $\Delta$T dépend ainsi uniquement des bruits ci-dessus et de la connaissance des biais, ce qui permet d'atteindre une précision de quelques microsecondes en pratique, en cumulant les bruits précédents (dans le pire cas). Cette précision est suffisante pour les besoins habituels de calage de date bord par rapport au temps universel du sol.

Un boîtier électronique 21 est inséré au niveau de la station sol 1 entre l'interface 4 de formatage bande de base et le modulateur QPSK 7 appartenant à l'électronique d'émission radio-fréquence. Ce boîtier électronique 21 permet la mesure de l'intervalle de temps sol $\Delta$tsol écoulé entre l'instant de réception du bit de référence et l'instant d'émission du bit de synchronisation de la trame de synchronisation TC-Dist. Cette mesure est ainsi effectuée par référence à la fréquence du signal d'horloge fournissant le temps sol (horloge atomique 20 ou récepteur GPS) de la station sol 1. Cette mesure ainsi que la date absolue TUsol d'envoi du bit de synchronisation sont insérées dans le paquet émis vers l'engin spatial 2 contenant ou formant la trame de mesure TC-mes.

Dans les exemples représentés et de préférence, le bit de synchronisation TC-Dist est le premier bit de la trame de synchronisation TC-Dist. En outre, la trame de synchronisation TC-Dist contient avantageusement un compteur Cpt permettant de lever les ambiguïtés à bord de l'engin spatial 2. Ce compteur est par exemple celui qui est prévu dans l'entête des paquets CCSDS et peut être inséré dans la trame de synchronisation TC-Dist à l'émission par le système sol 3. A la sortie du boîtier électronique 21, les trains de bits formant les trames de synchronisation TC-Dist et TC-mes sont envoyés aux moyens d'émission 7, 8.

L'engin spatial 2 comprend, associé à la carte de décodage 13, un composant électronique 22 spécifique (ASIC ou FPGA programmé à cet effet) adapté pour reconnaître la trame de synchronisation TC-Dist par corrélation du train de bits démodulé. Ce composant électronique 22 effectue une recherche de profil et est cadencé à partir de l'oscillateur 19 du système bord 14. Un compteur 23 cadencé par l'oscillateur bord 19 selon le temps bord mesure l'intervalle de temps bord $\Delta$tbord séparant la réception du bit de synchronisation par rapport à l'instant d'émission du bit de référence de la trame de télémesure TM de numéro NTb en cours d'émission par le système bord 14. Ces valeurs NTb, $\Delta$tbord sont stockées dans un registre lisible par le système bord à tout moment, avec la valeur du compteur Cpt repérant la trame de synchronisation TC-Dist correspondant.

Lorsque la corrélation permet de détecter la présence en réception d'une trame de synchronisation TC-Dist, on enregistre dans un registre 24 les valeurs de Cpt et les valeurs NTs et $\Delta$tsol reçues dans la trame de mesure TC-mes subséquente, et les valeurs NTb et $\Delta$tbord correspondantes.

Pour permettre la détermination de la durée de transit $\Delta$T sans le concours du système bord 14, c'est-à-dire au niveau de la station sol 1, le contenu du registre 24 est de préférence renvoyé en tant que trame de télémesure, après que le système de bord 14 y ait de préférence rajouté la valeur courante du compteur de temps bord TUbord issue de l'oscillateur 19 permettant ultérieurement la corrélation du temps bord et du temps sol.

Il est à noter que dès que les valeurs sont reçues et enregistrées dans le registre 24, toutes les informations permettant la détermination de la durée de transit $\Delta$T sont connues. Ainsi, ces valeurs peuvent être ultérieurement transmises au programme de calcul du système bord 14, les aléas de temps dus aux diverses latences et temps de réponse de ce programme n'ayant plus d'importance. Ainsi, la lecture du registre 24 peut être différée par rapport à la réception des différents paquets de télécommande directement issus du décodeur 13.

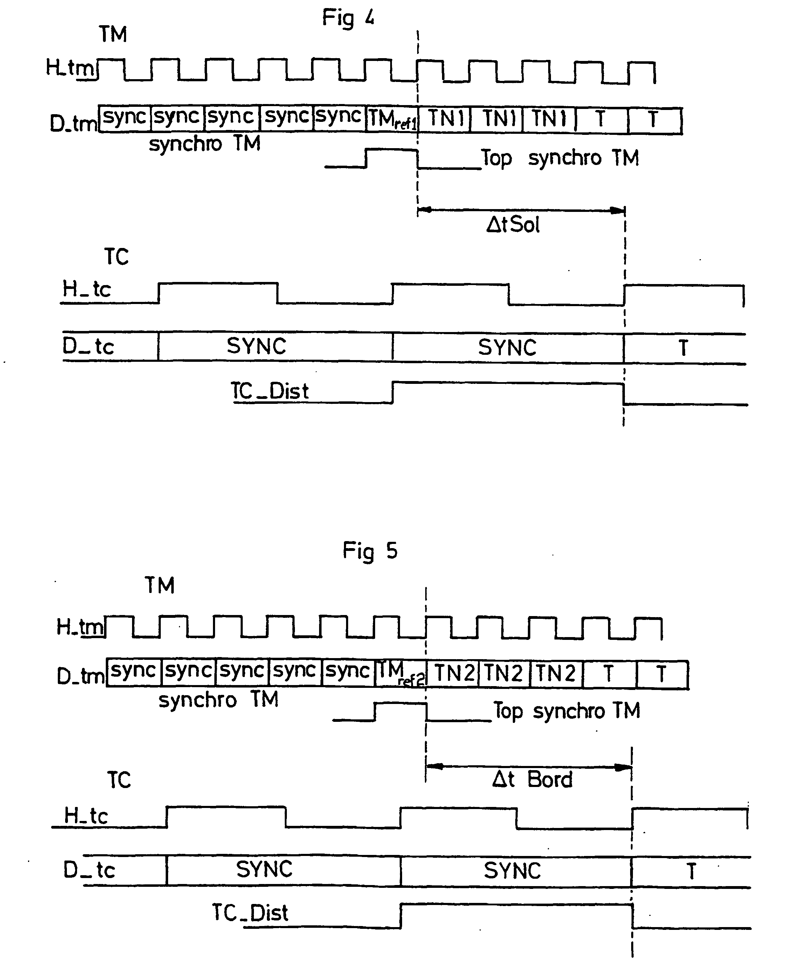

La figure 4 représente le chronogramme de signaux de télémesure reçus H-tm et D-tm ainsi que des signaux de télécommande TC émis H-tc et D-tc par le système sol 3. Comme on le voit, le temps $\Delta$tsol est mesuré entre le front descendant du bit de référence TM-ref 1 de la trame de télémesure en cours de réception par le système sol, et le front descendant du bit de synchronisation de la trame de synchronisation TC-Dist émis par le système sol 3. De même, comme on le voit figure 5, le temps $\Delta$tbord est mesuré entre le front descendant du bit de référence TM-ref 2 de la dernière trame de télémesure TM émise par le système bord 14 (de numéro NTb) et le front descendant du bit de synchronisation de la trame de synchronisation TC-Dist reçue par le système bord 14.

Il est à noter que le boîtier électronique 21 du système sol comprend également un composant corrélateur 25 semblable au composant corrélateur 23 du système bord. Ce composant 25 a également pour fonction d'insérer la date TUsol dans la trame de mesure TC-mes à partir de l'horloge 20 du système sol 3. Le corrélateur 25 calcule également le temps $\Delta$tsol à partir du signal de synchronisation qui lui est fourni sous la forme du bit de référence TM-ref 1 récupéré sur les trames reçues par une synchronisation de trame 26.

Du fait que le temps sol TUsol est intégré à la trame de mesure TC-mes, le programme de vol du système bord 14 peut reconstituer la date universelle d'un top d'horloge à 1 Hz à flanc précis permettant de calculer le temps bord TUbord distribué dans tout le système bord 14 ainsi qu'aux charges utiles de l'engin spatial 2 qui requièrent un temps bord précis. En pratique, il est constaté que la précision obtenue sur le TUbord peut être meilleure que la milliseconde et même atteindre des valeurs proches de quelques microsecondes en utilisant des algorithmes de décalage traditionnel. Tous les signaux d'horloge du système bord 14 sont dérivés de l'oscillateur OCXO maître 19.

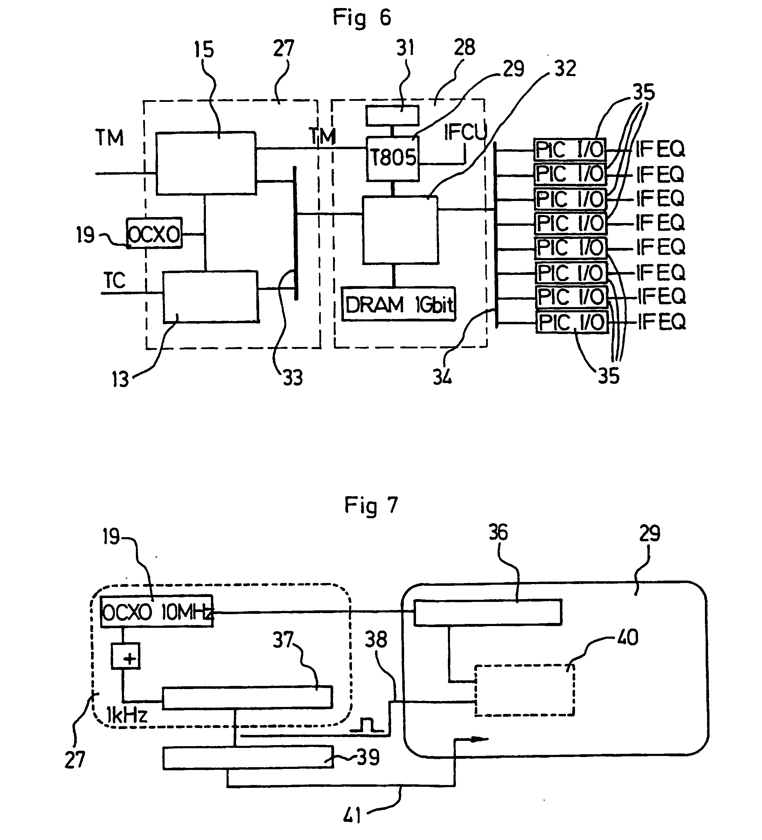

Le système bord 14 présente une architecture globalement organisée comme représenté figure 6, et comprend :

- une carte TM/TC 27 comportant tous les circuits temps réel des générations des signaux d'horloge de bord de décodage 13 des trames de télécommande TC et de formatage ou codage 15 des trames de télémesure TM,
- une carte mère 28 comprenant un processeur 29 cadencé à 20 MHz, une mémoire DRAM 30 volatile protégée par EDAC et utilisée comme mémoire de code et de masse, une mémoire flash EPROM 31 non volatile assurant le stockage des logiciels, et un composant de gestion de mémoire 32 formé d'un circuit intégré programmable FPGA assurant les décodages et l'interface externe de la carte mère 28 avec d'une part, la carte TM/TC 27 et son bus I2C 33, et d'autre part, avec un bus 34 d'entrée/sortie relié à une ou plusieurs cartes d'entrée/sortie 35 basé sur des microcontroleurs.

Le circuit 15 de codage des trames de télémesure TM est réalisé par un circuit intégré programmable FPGA. La fonction de décodage des trames de télécommande TC peut être réalisée par logiciel dans des microcontrôleurs.

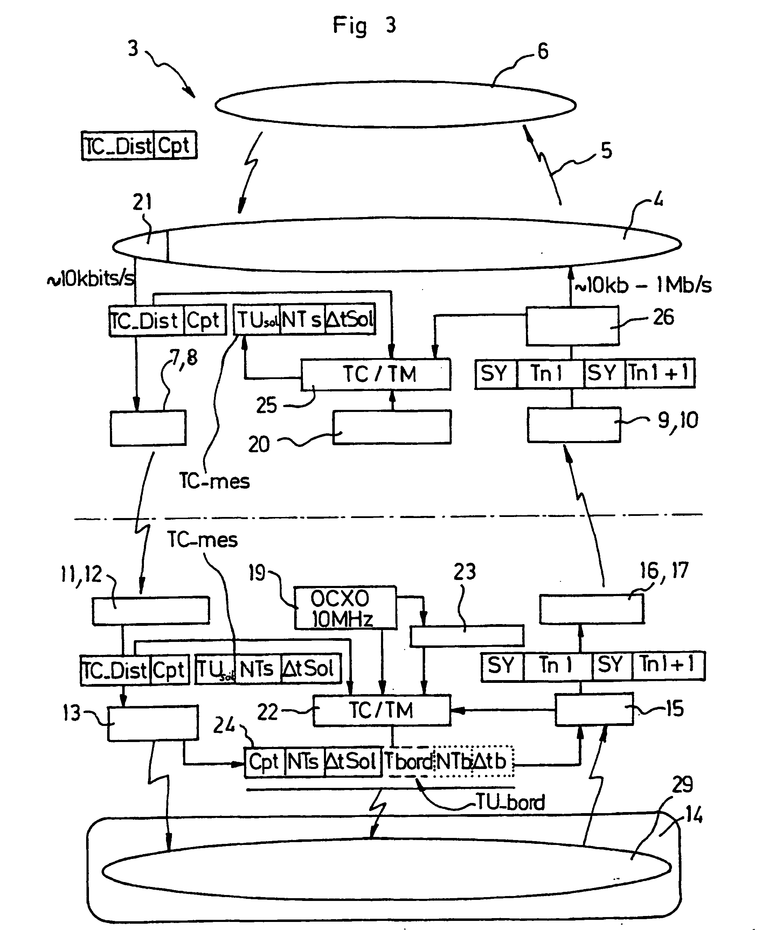

Les relations entre les cartes se font par le biais de liaisons série utilisant des bus de communication 33, 34 I2C. Les protocoles de communication sont de type client/serveur et les échanges sont toujours à l'initiative du logiciel implanté sur le processeur 29. Tous les signaux d'horloge, et notamment le signal d'horloge du processeur 29 sont dérivés de l'oscillateur OCXO maître 19. Le circuit intégré 15 de la carte TM/TC 27 incorpore la fonction de détection de profil de trame de synchronisation TC-Dist en agissant comme un décodeur de télécommande directe ; la fonction de corrélation entre la trame de synchronisation TC-Dist et la trame de télémesure en cours d'émission ; les registres de stockage des mesures ; et le compteur récurrent de temps bord ayant une résolution d'au moins une milliseconde. Ainsi, ce composant 15 réalise les fonctions du corrélateur 23 et du registre 24 de la figure 3.

Un signal de commande directement activé par le logiciel (ayant une latence de quelques microsecondes) permet d'effectuer la corrélation entre l'horloge interne 36 du processeur 29 (figure 7) et le compteur de temps bord 37 de la carte TM/TC 27 tel que réalisé par le circuit intégré 15. Une séquence programmée de logiciel non interruptible 40 schématisée figure 7 permet de lire le temps issu de l'horloge interne 36 et d'adresser de façon synchronisée un signal de commande 38 au compteur de temps bord 37 qui délivre alors un signal d'enclenchement du temps bord 39 qui est fourni 41 au processeur 29. De la sorte, le processeur 29 peut lire le temps bord TUbord de façon synchronisée avec une grande précision de datation, d'une valeur d'environ une dizaine de microsecondes. Cette mesure est sans dérive car la même horloge est utilisée en permanence et dans tout le système. Le faible taux de temps de latence aux interruptions du processeur 29 permet de dater avec précision l'occurrence d'événements externes, en se référant à l'horloge interne 36. Des stratégies de surveillance de l'horloge interne 36 du processeur 29, sensible aux décalages peuvent être introduites au niveau de la programmation du logiciel sans nécessiter de circuit supplémentaire.

Ainsi, l'invention permet simplement de caler le temps bord universel TUbord sur le temps universel sol TUsol par la formule TUbord = $\Delta$T+TUsol.

De façon similaire, il est possible de déterminer par exemple la distance D entre la station sol 1 et l'engin spatial 2 à l'aide de la durée de transit $\Delta$T. En effet, D = $\Delta$T x C, où C est la vitesse de la lumière, au retard ionosphérique près. Il est également possible d'incorporer une compensation Doppler pour améliorer le calcul de cette distance. Ce calcul peut être effectué aussi bien à bord de l'engin spatial 2 qu'au niveau de la station sol 1. En effet, les informations permettant le calcul de la distance D peuvent être renvoyées au sol dans les trames de télémesure TM par l'engin spatial 2 comme mentionné précédemment et représenté figure 3.

L'invention permet d'obtenir ces fonctionnalités de façon extrêmement simple et peu coûteuse. En particulier, il est à noter que la mise en oeuvre de l'invention nécessite extrêmement peu de matériel bord spécifique à bord de l'engin spatial 2. Essentiellement, il s'agit d'un corrélateur de profil de train de bits 23 permettant la détection de la trame de synchronisation TC-Dist et d'un ensemble de registres de stockage temporaire, le tout dans le circuit intégré programmable FPGA 15 qui réalise le codage des trames de télémesure TM. Un top synchronisé sur le premier bit de la trame de télémesure TM et le numéro de trame courant NTb sont fournis par le circuit intégré FPGA 15. Et un signal direct venant de la carte mère 28 permet le calage du temps de l'horloge interne 36 du processeur 29. Un compteur de temps en roue libre cadencé par une horloge 1 KHz est distribué dans tout le calculateur et est également réalisé dans le circuit intégré 15 de codage des trames de télémesure. Ce compteur 37 est protégé contre les décalages.

Ainsi, l'ensemble des fonctionnalités permettant la mise en oeuvre de l'invention au niveau de l'engin spatial 2 peuvent être implémentées dans le circuit intégré programmable FPGA 15 qui réalise le codage des trames de télémesure TM.

Au niveau de la station sol 1, le matériel nécessaire est essentiellement constitué du boîtier électronique 21 comprenant une entrée pour un signal d'horloge de référence sol, une entrée de datation du temps universel avec une interface dépendant de l'horloge utilisée, et un corrélateur de profil de train de bits 25 pour détecter la trame de synchronisation TC-Dist. Lors d'une application dans laquelle la station doit communiquer avec plusieurs engins spatiaux simultanément (station multisatellites, ou constellation de satellites), il est souhaitable de rendre paramétrable le profil détecté par ce corrélateur 25, par exemple en fonction d'une adresse d'engin spatial, et ce, via une interface adéquate avec la bande de base 4 de la station sol 1.

La station sol 1 doit également comprendre une logique d'incorporation des résultats de mesure dans le champ approprié de la trame de mesure TC-mes en cours d'émission. Ceci impose que le boîtier électronique 21 soit placé de façon à fournir les signaux de données d'horloge destinés aux modulateurs 7 de la station sol 1. Par contre, à la réception des trames de télémesure TM, il suffit de lire la trame de télémesure TM reçue et le signal d'horloge associé. En pratique, un simple microcontrôleur de gestion associé à un circuit intégré programmable FPGA peuvent servir pour réaliser le boîtier électronique 21, de façon semblable à ce qui a été décrit en référence au système bord 14.

L'invention peut faire l'objet d'autres variantes et applications que celles décrites ci-dessus à titre d'exemple non limitatif. Par exemple, les signaux peuvent être transmis non pas par ondes électromagnétiques, mais par transmission optique. Le sol peut être distinct du sol terrestre (sol d'une autre planète, ou même autre engin spatial tel qu'une station spatiales considéré comme le sol...).

## Revendications

1. Procédé pour déterminer la durée de transit $\Delta T$ des signaux véhiculant des informations numériques entre une station sol (1) équipée d'un système informatique, dit système sol (3), et un engin spatial (2) équipé d'un système informatique, dit système bord (14), procédé dans lequel on émet en permanence successivement des trames d'informations numériques sous forme de bits, dites trames de télémesure TM, de taille fixe prédéterminée, de l'engin spatial (2) vers la station sol (1), chaque trame de télémesure TM comprenant un numéro de trame, **caractérisé en ce que** :

   - on mesure le temps dans la station sol (1), dit temps sol, avec un signal d'horloge de fréquence au moins égale à 10 MHz,
   - on mesure le temps à bord de l'engin spatial (2), dit temps bord, avec un signal d'horloge de fréquence au moins égale à 10 MHz,
   - on génère dans le système sol (3) et on émet de la station sol (1) vers l'engin spatial (2), une trame d'informations numériques sous forme de bits, dite trame de synchronisation TC-Dist, comprenant au moins un bit en bande de base, dit bit de synchronisation,
   - on mesure et on enregistre dans la station sol (1) l'intervalle de temps sol $\Delta$tsol écoulé entre l'instant d'émission du bit de synchronisation et l'instant de réception d'un bit en bande de base, dit bit de référence, d'une trame de télémesure reçue préalablement par le système sol (3), et on enregistre le numéro de trame NTs de cette trame de télémesure,
   - on génère et on émet vers l'engin spatial (2) une trame d'informations numériques sous forme de bits, dite trame de mesure TC-mes, depuis la station sol (1), incorporant l'intervalle de temps sol $\Delta$tsol et le numéro de trame NTs de la trame de télémesure comprenant le bit de référence,
   - on mesure à bord de l'engin spatial (2) l'intervalle de temps bord $\Delta$tbord écoulé entre la réception du bit de synchronisation par le système bord (14), et l'émission par le système bord (14) du bit de référence d'une trame de télémesure dont le numéro de trame NTb est enregistré,
   - on reçoit et on enregistre à bord de l'engin spatial (2) l'intervalle de temps sol $\Delta$tsol et le numéro de trame NTs contenus dans la trame de mesure TC-mes,
   - on calcule la durée de transit $\Delta T$ par la formule :

$$2\Delta T = \Delta tbord - \Delta tsol + (NTb - NTs) \times d \text{ trame}$$

$$- \text{biais (sol)} - \text{biais (bord)} - \text{bruit (sol)} - \text{bruit (bord)}$$

   où :

   - d trame est la durée totale, mesurée en temps bord, de l'émission d'une trame de télémesure,
   - biais (sol) et biais (bord) sont des délais induits par les émetteurs et récepteurs des ondes électromagnétiques dans la station sol (1) et, respectivement, dans l'engin spatial (2),
   - bruit (sol) et bruit (bord) sont des bruits de phase de restitution des horloges de bits des trames à l'émission et à la réception, dans la station sol (1) et, respectivement, dans l'engin spatial (2).

2. Procédé selon la revendication 1, **caractérisé en ce qu'**on calcule la durée de transit $\Delta T$ par le système bord (14), à bord de l'engin spatial (2), de sorte que la valeur $\Delta T$ est connue à bord de l'engin spatial (2).

3. Procédé selon la revendication 2, **caractérisé en ce que** la trame de mesure TC-mes incorpore en outre la date absolue TUsol d'émission au sol du bit de synchronisation et **en ce qu'**on cale le temps bord absolu TUbord à partir de la date absolue TUsol et de la durée de transit $\Delta T$ calculée.

4. Procédé selon l'une des revendications 1 à 3, **caractérisé en ce qu'**on calcule la distance D entre la station sol (1) et l'engin spatial (2) à l'aide de la durée de transit $\Delta T$.

5. Procédé selon l'une des revendications 1 à 4, **caractérisé en ce qu'**on émet des trames d'informations numériques sous forme de bits, dites trames de télécommande TC, de la station sol (7) vers l'engin spatial (2) selon un protocole prédéterminée reconnu par le système bord (14), et **en ce que** la trame de synchronisation TC-Dist constitue une trame de télécommande ou est incorporée dans une trame de télécommande TC.

6. Procédé selon l'une des revendications 1 à 5, **caractérisé en ce que** le bit de référence d'une trame de télémesure est le premier bit de cette trame de télémesure suivant un moi de synchronisation intercalé entre les trames de télémesure.

7. Procédé selon l'une des revendications 1 à 6, **caractérisé en ce que** le bit de synchronisation est le premier bit de la trame de synchronisation TC-Dist suivant un mot de synchronisation permettant au système bord (14) de reconnaître les trames de télécommande.

8. Procédé selon l'une des revendications 1 à 7, **caractérisé en ce que** la trame de mesure TC-mes est distincte de la trame de synchronisation TC-Dist et est émise immédiatement à la suite de la trame de synchronisation TC-Dist.

9. Procédé selon l'une des revendications 1 à 8, **caractérisé en ce que** la trame de synchronisation TC-Dist incorpore un champ (Cpt) identifiant un numéro de trame de synchronisation TC-Dist fourni par un compteur du système sol (3).

10. Procédé selon l'une des revendications 1 à 9, **caractérisé en ce que** la trame de télémesure de numéro NTs comprenant le bit de référence permettant de calculer l'intervalle de temps sol $\Delta$tsol est la trame de télémesure en cours de réception par le système sol (3) lors de l'émission du bit de synchronisation.

11. Procédé selon l'une des revendications 1 à 10, **caractérisé en ce que** la trame de télémesure de numéro NTb comprenant le bit de référence permettant de calculer l'intervalle de temps bord $\Delta$tbord est la trame de télémesure en cours d'émission par le système bord (14) lors de la réception de la trame de synchronisation TC-Dist par le système bord (14).

12. Procédé selon l'une des revendications 1 à 11, **caractérisé en ce qu'**on mesure le temps sol avec un signal d'horloge issu d'une horloge atomique.

13. Procédé selon l'une des revendications 1 à 11, **caractérisé en ce qu'**on mesure le temps sol avec un signal d'horloge issu d'un récepteur d'un système GPS de positionnement à partir d'une constellation de satellites.

14. Procédé selon l'une des revendications 1 à 13, **caractérisé en ce qu'**on mesure le temps bord avec un signal d'horloge issu d'un oscillateur embarqué (19) distinct d'une horloge atomique et d'un récepteur d'un système GPS de positionnement à partir d'une constellation de satellites.

15. Dispositif pour déterminer la durée de transit $\Delta$T de signaux véhiculant des informations numériques entre une station sol (1) équipée d'un système informatique, dit système sol (3), et un engin spatial (2) équipé d'un système informatique, dit système bord (14), dans lequel le système bord (14) est adapté pour émettre en permanence successivement des trames d'informations numériques sous forme de bits, dites trames de télémesure TM, de taille fixe prédéterminée, de l'engin spatial (2) vers la station sol (1), chaque trame de télémesure comprenant un numéro de trame, **caractérisé en ce qu'**il comprend :

   - dans le système sol (3), un signal d'horloge de fréquence au moins égale à 10 MHz, adapté pour mesurer le temps dans la station sol (1), dit temps sol,
   - dans le système bord (14), un signal d'horloge de fréquence au moins égale à 10 MHz, adapté pour mesurer le temps à bord de l'engin spatial (2), dit temps bord,
   - dans le système sol (3), des moyens adaptés pour générer et émettre vers l'engin spatial (2) une trame d'informations numériques sous forme de bits, dite trame de synchronisation TC-Dist, comprenant au moins un bit en bande de base, dit bit de synchronisation,
   - dans la station sol (1), des moyens pour mesurer et enregistrer l'intervalle de temps sol $\Delta$tsol écoulé entre l'instant d'émission du bit de synchronisation et l'instant de réception d'un bit en bande de base, dit bit de référence, d'une trame de télémesure reçue préalablement par le système sol (3), et des moyens pour enregistrer le numéro de trame NTs de cette trame de télémesure,
   - dans le système sol (3), des moyens adaptés pour générer et émettre vers l'engin spatial (2) une trame d'informations numériques sous forme de bits, dite trame de mesure TC-mes, incorporant l'intervalle de temps sol $\Delta$tsol et le numéro de trame NTs de la trame de télémesure comprenant le bit de référence,

- à bord de l'engin spatial (2), des moyens pour mesurer l'intervalle de temps bord $\Delta$tbord écoulé entre la réception du bit de synchronisation par le système bord (14), et l'émission par le système bord (14) du bit de référence d'une trame de télémesure dont le numéro de trame NTb est enregistré,
- des moyens pour recevoir et enregistrer à bord de l'engin spatial (2) l'intervalle de temps sol $\Delta$tsol et le numéro de trame NTs contenus dans la trame de mesure TC-mes,
- des moyens pour calculer la durée de transit $\Delta$T par la formule :

$$2\Delta T = \Delta tbord - \Delta tsol + (NTb - NTs) \times d\ trame$$

$$- \text{biais (sol)} - \text{biais (bord)} - \text{bruit (sol)} - \text{bruit (bord)}$$

où:

- d trame est la durée totale, mesurée en temps bord, de l'émission d'une trame de télémesure,
- biais (sol) et biais (bord) sont des délais induits par les émetteurs et récepteurs des ondes électromagnétiques dans la station sol (1) et, respectivement, dans l'engin spatial (2),
- bruit (sol) et bruit (bord) sont des bruits de phase de restitution des horloges de bits des trames à l'émission et à la réception, dans la station sol (1) et, respectivement, dans l'engin spatial (2).

**16.** Dispositif selon la revendication 15, **caractérisé en ce que** le système bord (14) est adapté pour mesurer l'intervalle de temps bord $\Delta$tbord et pour calculer la durée de transit $\Delta$T, de sorte que cette valeur $\Delta$T est connue à bord de l'engin spatial (2).

**17.** Dispositif selon l'une des revendications 15 ou 16, **caractérisé en ce que** le système sol (3) est adapté pour incorporer dans la trame de mesure TC-mes la date absolue TUsol d'émission au sol du bit de synchronisation, et **en ce que** le système bord (14) est adapté pour caler le temps bord absolu à partir de la date absolue TUsol et de la durée de transit $\Delta$T calculée.

**18.** Dispositif selon l'une des revendications 15 à 17, **caractérisé en ce qu'**il comprend des moyens pour calculer la distance D entre la station sol (1) et l'engin spatial (2) à l'aide de la durée de transit $\Delta$T calculée.

**19.** Dispositif selon l'une des revendications 15 à 18, **caractérisé en ce que** le système sol (3) est adapté pour émettre des trames d'informations numériques sous forme de bits, dites trames de télécommande TC, vers l'engin spatial (2) selon un protocole prédéterminé reconnu par le système bord (14), et pour former la trame de synchronisation TC-Dist en tant que trame de télécommande ou l'incorporer dans une trame de télécommande TC.

**20.** Dispositif selon l'une des revendications 15 à 19, **caractérisé en ce que** la trame de mesure TC-mes est distincte de la trame de synchronisation TC-Dist et **en ce que** le système sol (3) est adapté pour émettre la trame de mesure TC-mes immédiatement à la suite de la trame de synchronisation TC-Dist.

**21.** Dispositif selon l'une des revendications 15 à 20, **caractérisé en ce que** le système sol (3) comprend un compteur de trame de synchronisation TC-Dist délivrant un numéro (Cpt) de trame de synchronisation TC-Dist incorporé dans un champ de la trame de synchronisation TC-Dist.

**22.** Dispositif selon l'une des revendications 15 à 21, **caractérisé en ce que** le système sol (3) comprend une horloge atomique.

**23.** Dispositif selon l'une des revendications 15 à 21, **caractérisé en ce que** le système sol (3) comprend des moyens pour délivrer un signal d'horloge à partir d'informations reçues par un récepteur de système GPS de positionnement à partir d'une constellation de satellites.

**24.** Dispositif selon l'une des revendications 15 à 23, **caractérisé en ce que** le système bord (14) comprend un oscillateur embarqué (19) distinct d'une horloge atomique et d'un récepteur de système GPS de positionnement à partir d'une constellation de satellites.

**Patentansprüche**

1. Verfahren zum Ermitteln der Laufzeit ∆T von Signalen, die digitale Informationen zwischen einer Bodenstation (1), die mit einem Datenverarbeitungssystem ausgestattet ist, Bodensystem (3) genannt, und einem Raumflugkörper (2), der mit einem Datenverarbeitungssystem ausgestattet ist, Bordsystem (14) genannt, übertragen, wobei in dem Verfahren ständig aufeinander folgend Digitalinformationsblöcke in Bitform, Telemetrieblöcke TM genannt, von vorbestimmter fester Größe vom Raumflugkörper (2) zur Bodenstation (1) gesendet werden, wobei jeder Telemetrieblock TM eine Blocknummer umfasst, **dadurch gekennzeichnet, dass**:

   - die Zeit in der Bodenstation (1), Bodenzeit genannt, mit einem Taktsignal mit einer Frequenz von wenigstens 10 MHz gemessen wird,
   - die Zeit an Bord des Raumflugkörpers (2), Bordzeit genannt, mit einem Taktsignal von einer Frequenz von wenigstens 10 MHz gemessen wird,
   - im Bodensystem (3) ein Digitalinformationsblock in Bitform, Synchronisationsblock TC-Dist genannt, der wenigstens ein Basisbandbit umfasst, Synchronisationsbit genannt, erzeugt und von der Bodenstation (1) zum Raumflugkörper (2) gesendet wird,
   - in der Bodenstation (1) das Bodenzeitintervall ∆tsol gemessen und gespeichert wird, das zwischen dem Zeitpunkt des Sendens des Synchronisationsbits und dem Zeitpunkt des Empfangs eines Basisbandbits, Referenzbit genannt, eines Telemetrieblocks verstrichen ist, der zuvor vom Bodensystem (3) empfangen wurde, und die Blocknummer NTs dieses Telemetrieblocks gespeichert wird,
   - ein Digitalinformationsblock in Bitform, Messblock TC-mes genannt, erzeugt und von der Bodenstation (1) zum Raumflugkörper (2) gesendet wird, der das Bodenzeitintervall ∆tsol und die Blocknummer NTs des das Referenzbit umfassenden Telemetrieblocks beinhaltet,
   - an Bord des Raumflugkörpers (2) das Bordzeitintervall ∆tbord gemessen wird, das zwischen dem Empfang des Synchronisationsbits durch das Bordsystem (14) und dem Senden des Referenzbits eines Telemetrieblocks, dessen Blocknummer NTb gespeichert ist, durch das Bordsystem (14) verstrichen ist,
   - an Bord des Raumflugkörpers (2) das Bodenzeitintervall ∆tsol und die Blocknummer NTs, die in dem Messblock TC-mes enthalten sind, an Bord des Raumflugkörpers (2) empfangen und gespeichert werden,
   - die Laufzeit ∆T mit der folgenden Formel errechnet wird:

   $$2\Delta T = \Delta tbord - \Delta tsol + (NTb - NTs) \times d\ Block$$

   $$- Bias\ (Boden) - Bias\ (Bord) - Rauschen\ (Boden) - Rauschen\ (Bord),$$

   wobei:
   - d Block die Gesamtdauer, in Bordzeit gemessen, des Sendens eines Telemetrieblocks,
   - Bias (Boden) und Bias (Bord) die durch die Sender und Empfänger von elektromagnetischen Wellen in der Bodenstation (1) bzw. dem Raumflugkörper (2) verursachten Verzögerungen,
   - Rauschen (Boden) und Rauschen (Bord) das Wiederherstellungsphasenrauschen von Bittakten von Blöcken beim Senden und Empfangen jeweils in der Bodenstation (1) und im Raumflugkörper (2) sind.

2. Verfahren nach Anspruch 1, **dadurch gekennzeichnet, dass** die Laufzeit ∆T durch das Bordsystem (14) an Bord des Raumflugkörpers (2) berechnet wird, so dass der Wert ∆T an Bord des Raumflugkörpers (2) bekannt ist.

3. Verfahren nach Anspruch 2, **dadurch gekennzeichnet, dass** der Messblock TC-mes ferner den absoluten Zeitpunkt TUsol des Sendens des Synchronisationsbits am Boden beinhaltet, und **dadurch**, dass die absolute Bordzeit TUbord auf der Basis des absoluten Zeitpunkts TUsol und der berechneten Laufzeit ∆T eingestellt wird.

4. Verfahren nach einem der Ansprüche 1 bis 3, **dadurch gekennzeichnet, dass** die Distanz D zwischen der Bodenstation (1) und dem Raumflugkörper (2) anhand der Laufzeit ∆T berechnet wird.

5. Verfahren nach einem der Ansprüche 1 bis 4, **dadurch gekennzeichnet, dass** Digitalinformationsblöcke in Bitform, Fernsteuerungsblöcke TC genannt, von der Bodenstation (7) zum Raumflugkörper (2) gemäß einem vorbestimmten, vom Bordsystem (14) erkannten Protokoll gesendet werden, und **dadurch**, dass der Synchronisationsblock TC-Dist einen Fernsteuerungsblock bildet oder in einem Fernsteuerungsblock TC integriert ist.

6. Verfahren nach einem der Ansprüche 1 bis 5, **dadurch gekennzeichnet, dass** das Referenzbit eines Telemetrieblocks das erste Bit dieses Telemetrieblocks ist, das auf ein zwischen den Telemetrieblock eingeschobenes Synchronisationswort folgt.

7. Verfahren nach einem der Ansprüche 1 bis 6, **dadurch gekennzeichnet, dass** das Synchronisationsbit das erste Bit des Synchronisationsblocks TC-Dist ist, das auf ein Synchronisationswort folgt, anhand dessen das Bordsystem (14) die Fernsteuerungsblöcke erkennen kann.

8. Verfahren nach einem der Ansprüche 1 bis 7, **dadurch gekennzeichnet, dass** der Messblock TC-mes von dem Synchronisationsblock TC-Dist getrennt ist und unmittelbar nach dem Synchronisationsblock TC-Dist gesendet wird.

9. Verfahren nach einem der Ansprüche 1 bis 8, **dadurch gekennzeichnet, dass** der Synchronisationsblock TC-Dist ein Feld (Cpt) beinhaltet, das eine Synchronisationsblocknummer TC-Dist identifiziert, die von einem Zähler des Bodensystems (3) geliefert wurde.

10. Verfahren nach einem der Ansprüche 1 bis 9, **dadurch gekennzeichnet, dass** der Telemetrieblock mit der Nummer NTs, der das Referenzbit umfasst, anhand dessen das Bodenzeitintervall $\Delta$tsol berechnet werden kann, der Telemetrieblock im Laufe des Empfangens durch das Bodensystem (3) während des Sendens des Synchronisationsbits ist.

11. Verfahren nach einem der Ansprüche 1 bis 10, **dadurch gekennzeichnet, dass** der Telemetrieblock mit der Nummer NTb, der das Referenzbit umfasst, anhand dessen das Bordzeitintervall $\Delta$tbord berechnet werden kann, der Telemetrieblock im Laufe des Sendens durch das Bordsystem (14) während des Empfangens des Synchronisationsblocks TC-Dist durch das Bordsystem (14) ist.

12. Verfahren nach einem der Ansprüche 1 bis 11, **dadurch gekennzeichnet, dass** die Bodenzeit mit einem Taktsignal von einer Atomuhr gemessen wird.

13. Verfahren nach einem der Ansprüche 1 bis 11, **dadurch gekennzeichnet, dass** das Bodensignal mit einem Taktsignal von einem Empfänger eines GPS-Positionierungssystems auf der Basis einer Satellitenkonstellation gemessen wird.

14. Verfahren nach einem der Ansprüche 1 bis 13, **dadurch gekennzeichnet, dass** die Bordzeit mit einem Taktsignal von einem bordinternen Oszillator (19) gemessen wird, der sich von einer Atomuhr und einem Empfänger eines GPS-Positionierungssystems auf der Basis einer Satellitenkonstellation unterscheidet.

15. Vorrichtung zum Ermitteln der Laufzeit $\Delta$T von Signalen, die digitale Informationen zwischen einer Bodenstation (1), die mit einem Datenverarbeitungssystem ausgestattet ist, Bodensystem (3) genannt, und einem Raumflugkörper (2), der mit einem Datenverarbeitungssystem ausgestattet ist, Bordsystem (14) genannt, übertragen, wobei das Bordsystem (14) die Aufgabe hat, ständig aufeinander folgend Digitalinformationsblöcke in Bitform, Telemetrieblöcke TM genannt, von vorbestimmter fester Größe von dem Raumflugkörper (2) zur Bodenstation (1) zu senden, wobei jeder Telemetrieblock TM eine Blocknummer umfasst, **dadurch gekennzeichnet, dass** sie Folgendes umfasst:

   - im Bodensystem (3) ein Taktsignal mit einer Frequenz von wenigstens 10 MHz mit der Aufgabe, die Zeit in der Bodenstation (1), Bodenzeit genannt, zu messen,
   - im Bordsystem (14) ein Taktsignal mit einer Frequenz von wenigstens 10 MHz mit der Aufgabe, die Bordzeit des Raumflugkörpers (2), Bordzeit genannt, zu messen,
   - im Bodensystem (3) Mittel mit der Aufgabe, einen Digitalinformationsblock in Bitform, Synchronisationsblock TC-Dist genannt, der wenigstens ein Basisbandbit, Synchronisationsbit genannt, umfasst, zu erzeugen und zum Raumflugkörper (2) zu senden,
   - in der Bodenstation (1) Mittel zum Messen und Speichern des Bodenzeitintervalls $\Delta$tsol, das zwischen dem Sendezeitpunkt des Synchronisationsbits und dem Empfangszeitpunkt eines Basisbandbits, Referenzbit genannt, eines Telemetrieblocks verstrichen ist, der zuvor vom Bodensystem (3) empfangen wurde, und Mittel zum Speichern der Blocknummer NTs dieses Telemetrieblocks,
   - im Bodensystem (3) Mittel mit der Aufgabe, einen Digitalinformationsblock in Bitform, Messblock TC-mes genannt, der das Bodenzeitintervall $\Delta$tsol und die Blocknummer NTs des das Referenzbit enthaltenden Telemetrieblocks enthält, zu erzeugen und zum Raumflugkörper (2) zu senden,

- an Bord des Raumflugkörpers (2) Mittel zum Messen des Bordzeitintervalls Δtbord, das zwischen dem Empfang des Synchronisationsbits durch das Bordsystem (14) und dem Senden des Referenzbits eines Telemetrieblocks, dessen Blocknummer NTb gespeichert ist, durch das Bordsystem (14) verstrichen ist,
- Mittel zum Empfangen und Speichern des Bodenzeitintervalls Δtsol und der Blocknummer NTs, die im Messblock TC-mes enthalten sind, an Bord des Raumflugkörpers (2),
- Mittel zum Berechnen der Laufzeit ΔT mittels der Formel:

$$2\Delta T = \Delta tbord - \Delta tsol + (NTb - NTs) \times d\ Block$$

$$- Bias\ (Boden) - Bias\ (Bord) - Rauschen\ (Boden) - Rauschen\ (Bord),$$

wobei:
- d Block die Gesamtdauer, in Bordzeit gemessen, des Sendens eines Telemetrieblocks,
- Bias (Boden) und Bias (Bord) die durch die Sender und Empfänger von elektromagnetischen Wellen in der Bodenstation (1) bzw. dem Raumflugkörper (2) verursachten Verzögerungen,
- Rauschen (Boden) und Rauschen (Bord) das Wiederherstellungsphasenrauschen von Bittakten von Blöcken beim Senden und Empfangen jeweils in der Bodenstation (1) und im Raumflugkörper (2) sind.

16. Vorrichtung nach Anspruch 15, **dadurch gekennzeichnet, dass** das Bordsystem (14) die Aufgabe hat, das Bordzeitintervall Δtbord zu messen und die Laufzeit ΔT zu berechnen, so dass dieser Wert ΔT an Bord des Raumflugkörpers (2) bekannt ist.

17. Vorrichtung nach Anspruch 15 oder 16, **dadurch gekennzeichnet, dass** das Bodensystem (3) die Aufgabe hat, in dem Messblock TC-mes den absoluten Zeitpunkt TUsol des Sendens des Synchronisationsbits am Boden zu integrieren, und **dadurch**, dass das Bordsystem (14) die Aufgabe hat, die absolute Bordzeit auf der Basis des absoluten Zeitpunkts TUsol und der berechneten Laufzeit ΔT einzustellen.

18. Vorrichtung nach einem der Ansprüche 15 bis 17, **dadurch gekennzeichnet, dass** sie Mittel zum Berechnen der Distanz D zwischen der Bodenstation (1) und dem Raumflugkörper (2) anhand der berechneten Laufzeit ΔT umfasst.

19. Vorrichtung nach einem der Ansprüche 15 bis 18, **dadurch gekennzeichnet, dass** das Bodensystem (3) die Aufgabe hat, Digitalinformationsblöcke in Bitform, Fernsteuerungsblöcke TC genannt, gemäß einem vorbestimmten, vom Bordsystem (14) erkannten Protokoll zum Raumflugkörper (2) zu senden und den Synchronisationsblock TC-Dist wie auch den Fernsteuerungsblock zu bilden oder in einem Fernsteuerungsblock TC zu integrieren.

20. Vorrichtung nach einem der Ansprüche 15 bis 19, **dadurch gekennzeichnet, dass** der Messblock TC-mes von dem Synchronisationsblock TC-Dist getrennt ist, und **dadurch**, dass das Bodensystem (3) die Aufgabe hat, den Messblock TC-mes unmittelbar nach dem Synchronisationsblock TC-Dist zu senden.

21. Vorrichtung nach einem der Ansprüche 15 bis 20, **dadurch gekennzeichnet, dass** das Bodensystem (3) einen Zähler von Synchronisationsblöcken TC-Dist umfasst, der eine Nummer (Cpt) für die Synchronisationsblöcke TC-Dist erzeugt, die in einem Feld des Synchronisationsblocks TC-Dist integriert ist.

22. Vorrichtung nach einem der Ansprüche 15 bis 21, **dadurch gekennzeichnet, dass** das Bodensystem (3) eine Atomuhr umfasst.

23. Vorrichtung nach einem der Ansprüche 15 bis 21, **dadurch gekennzeichnet, dass** das Bodensystem (3) Mittel zum Erzeugen eines Taktsignals auf der Basis von Informationen umfasst, die von einem Empfänger des GPS-Positionierungssystems auf der Basis einer Satellitenkonstellation empfangen wurden.

24. Vorrichtung nach einem der Ansprüche 15 bis 23, **dadurch gekennzeichnet, dass** das Bordsystem (14) einen bordinternen Oszillator (19) umfasst, der sich von einer Atomuhr und einem Empfänger des GPS-Positionierungssystems auf der Basis einer Satellitenkonstellation unterscheidet.

**Claims**

1. Method for determining the transit time ΔT of signals conveying digital data between a ground station (1) equipped with a computer system, known as a ground system (3), and a spacecraft (2) equipped with a computer system, known as an on-board system (14), method in which bit-form digital data frames known as telemetry frames TM, of a predetermined fixed size are continuously transmitted in succession from the spacecraft (2) toward the ground station (1), each telemetry frame TM comprising a frame number, **characterised in that**:

   - the time in the ground station (1), known as the ground time, is measured using a clock signal having a frequency of at least 10 MHz,
   - the time on board the spacecraft (2), known as the on-board time, is measured using a clock signal having a frequency of at least 10 MHz,
   - a bit-form digital data frame, known as a synchronisation frame TC-Dist, comprising at least one bit in baseband, known as a synchronisation bit, is generated in the ground station (3) and transmitted from the ground station (1) toward the spacecraft (2),
   - the ground time interval Δtsol between the moment of transmission of the synchronisation bit and the moment of reception of a baseband bit, known as a reference bit, of a telemetry frame received beforehand by the ground system (3), is measured and recorded in the ground station (1), and the frame number NTs of this telemetry frame is recorded,
   - a bit-form digital data frame, known as a measuring frame TC-mes from the ground station (1), including the ground time interval Δtsol and the frame number of the NTs of the telemetry frame, which comprises the reference bit, is generated and transmitted toward the spacecraft (2),
   - the on-board time interval Δtbord between the reception of the synchronisation bit by the on-board system (14), and the transmission by the on-board system (14) of the reference bit of a telemetry frame, the frame number NTb of which is recorded, is measured on board the spacecraft (2),
   - the ground time interval Δtsol and the frame number NTs contained in the measuring frame TC-mes are received and recorded on board the spacecraft (2),
   - the transit time ΔT is calculated by the formula:

$$2\Delta = \Delta tbord - \Delta tsol + (NTb - NTs) \times d\ frame - bias\ (ground)$$

$$- bias\ (on\text{-}board) - noise\ (ground) - noise\ (on\text{-}board)$$

   wherein:
   - d frame is the total duration, measured in on-board time, of the transmission of a telemetry frame,
   - bias (ground) and bias (on-board) are timeframes induced by the transmitters and receivers of the electromagnetic waves in the ground station (1) and in the spacecraft (2) respectively,
   - noise (ground) and noise (on-board) are restitution phase noises of the frame bit clocks on transmission and reception, in the ground station (1) and in the spacecraft (2) respectively.

2. Method according to claim 1, **characterised in that** the transit time ΔT is calculated by the on-board system (14) on board the spacecraft (2) such that the value ΔT is known on board the spacecraft (2).

3. Method according to claim 2, **characterised in that** the measuring frame TC-mes also includes the absolute date TUsol of transmission to the ground of the synchronisation bit, and **in that** the absolute on-board time TUbord is set from the absolute date TUsol and the calculated transit time ΔT.

4. Method according to any one of claims 1 to 3, **characterised in that** the distance D between the ground station (1) and the spacecraft (2) is calculated by means of the transit time ΔT.

5. Method according to any one of claims 1 to 4, **characterised in that** bit-form digital data frames, known as teleoperation frames TC, are transmitted from the ground station (7) toward the spacecraft (2) according to a predetermined protocol recognised by the on-board system (14), and **in that** the synchronisation frame TC-Dist constitutes a teleoperation frame or is incorporated in a teleoperation frame TC.

6. Method according to any one of claims 1 to 5, **characterised in that** the reference bit of a telemetry frame is the first bit of this telemetry frame following a synchronisation word inserted between the telemetry frames.

**EP 1 214 607 B1**

7. Method according to any one of claims 1 to 6, **characterised in that** the synchronisation bit is the first bit of the synchronisation frame TC-Dist following a synchronisation word allowing the on-board system (14) to recognise the teleoperation frames.

8. Method according to any one of claims 1 to 7, **characterised in that** the measuring frame TC-mes is different from the synchronisation frame TC-Dist and is transmitted immediately after the synchronisation frame TC-Dist.

9. Method according to any one of claims 1 to 8, **characterised in that** the synchronisation frame TC-Dist includes a field (Cpt) identifying a synchronisation frame number TC-Dist provided by a ground system counter (3).

10. Method according to any one of claims 1 to 9, **characterised in that** the telemetry frame of number NTs, which comprises the reference bit allowing the ground time interval Δtsol to be calculated, is the telemetry frame being received by the ground system (3) during transmission of the synchronisation bit.

11. Method according to any one of claims 1 to 10, **characterised in that** the number telemetry frame of number NTb, which comprises the reference bit allowing the on-board time interval Δtbord to be calculated, is the telemetry frame being transmitted by the on-board system (14) during reception of the synchronisation frame TC-Dist by the on-board system (14).

12. Method according to any one of claims 1 to 11, **characterised in that** the ground time is measured with a clock signal originating from an atomic clock.

13. Method according to any one of claims 1 to 11, **characterised in that** the ground time is measured with a clock signal originating from a receiver of a satellite constellation-based GPS positioning system.

14. Method according to any one of claims 1 to 13, **characterised in that** the on-board time is measured with a clock signal originating from an on-board oscillator (19), which is different from an atomic clock and a receiver of a satellite constellation-based GPS positioning system.

15. Device for determining the transit time ΔT of signals conveying digital data between a ground station (1) equipped with a computer system, known as a ground system (3), and a spacecraft (2) equipped with a computer system, known as an on-board system (14), in which the on-board system (14) is adapted for continuously transmitting in succession bit-form digital data frames, known as telemetry frames TM, of a predetermined fixed size, from the spacecraft (2) toward the ground station (1), each telemetry frame comprising a frame number, **characterised in that** it comprises:

   - in the ground system (3), a clock signal having a frequency of at least 10 MHz adapted for measuring the time in the ground station (1), known as the ground time,
   - in the on-board system (14), a clock signal having a frequency of at least 10 MHz adapted for measuring the time on board the spacecraft (2), known as the on-board time,
   - in the ground system (3), means adapted for generating and transmitting toward the spacecraft (2) a bit-form digital data frame, known as a synchronisation frame TC-Dist, comprising at least one bit in baseband, known as a synchronisation bit,
   - in the ground station (1), means for measuring and recording the ground time interval Δtsol between the moment of transmission of the synchronisation bit and the moment of reception of a bit in baseband, known as a reference bit, of a telemetry frame received beforehand by the ground system (3), and means for recording the frame number NTs of this telemetry frame,
   - in the ground system (3), means adapted for generating and transmitting toward the spacecraft (2) a bit-form digital data frame, known as a measuring frame TC-mes, including the ground time interval Δtsol and the frame number NTs of the telemetry frame which comprises the reference bit,
   - on board the spacecraft (2), means for measuring the on-board time interval Δtbord between the reception of the synchronisation bit by the on-board system (14) and the transmission by the on-board system (14) of the reference bit of a telemetry frame, the frame number NTb of which is recorded,
   - means for receiving and recording on board the spacecraft (2) the ground time interval Δtsol and the frame number NTs contained in the measuring frame TC-mes,
   - means for calculating the transit time ΔT by the formula:

17

$$2\Delta T = \Delta tbord - \Delta tsol + (NTb - NTs) \times d \text{ frame} - bias$$

$$(ground) - bias (on\text{-}board) - noise (ground) - noise (on\text{-} board)$$

wherein:

- d frame is the total duration, measured in on-board time, of the transmission of a telemetry frame,
- bias (ground) and bias (on-board) are timeframes induced by the transmitters and receivers of the electromagnetic waves in the ground station (1) and in the spacecraft (2) respectively,
- noise (ground) and noise (on-board) are restitution phase noises of the frame bit clocks on transmission and reception, in the ground station (1) and in the spacecraft (2) respectively.

16. Device according to claim 15, **characterised in that** the on-board system (14) is adapted for measuring the on-board time interval $\Delta tbord$ and for calculating the transit time $\Delta T$ such that this value $\Delta T$ is known on board the spacecraft (2).

17. Device according to either claim 15 or claim 16, **characterised in that** the ground system (3) is adapted for incorporating in the measuring frame TC-mes the absolute date TUsol of transmission to the ground of the synchronisation bit, and **in that** the on-board system (14) is adapted for setting the absolute on-board time on the basis of the absolute date TUsol and the calculated transit time $\Delta T$.

18. Device according to any one of claims 15 to 17, **characterised in that** it comprises means for calculating the distance D between the ground station (1) and the spacecraft (2) by means of the calculated transit time $\Delta T$.

19. Device according to any one of claims 15 to 18, **characterised in that** the ground system (3) is adapted for transmitting bit-form digital data frames, known as teleoperation frames TC, toward the spacecraft (2) according to a predetermined protocol recognised by the on-board system (14), and for forming the synchronisation frame TC-Dist as a teleoperation frame or for including it in a teleoperation frame TC.

20. Device according to any one of claims 15 to 19, **characterised in that** the measuring frame TC-mes is different from the synchronisation frame TC-Dist, and **in that** the ground system (3) is adapted for transmitting the measuring frame TC-mes immediately after the synchronisation frame TC-Dist.

21. Device according to any one of claims 15 to 20, **characterised in that** the ground system (3) comprises a synchronisation frame counter TC-Dist issuing a synchronisation frame TC-Dist number (Cpt) which is included in a field of the synchronisation frame TC-Dist.

22. Device according to any one of claims 15 to 21, **characterised in that** the ground system (3) comprises an atomic clock.

23. Device according to any one of claims 15 to 21, **characterised in that** the ground system (3) comprises means for issuing a clock signal on the basis of data received by a satellite constellation-based GPS positioning system receiver.

24. Device according to any one of claims 15 to 23, **characterised in that** the on-board system (14) comprises an on-board oscillator (19) which is different from an atomic clock and a satellite constellation-based GPS positioning system receiver.

Fig 1

Fig 2

EP 1 214 607 B1

Fig 3

3

6

TC_Dist Cpt

21

5

4

~10kbits/s

~10kb – 1Mb/s

TC_Dist Cpt

TU_Sol NTs ΔtSol

26

7,8

TC / TM

SY Tn1 SY Tn1+1

25

9,10

20

TC-mes

TC-mes

11,12

19

23

16,17

OCXO 10MHz

TC_Dist Cpt

TU_Sol NTs ΔtSol

SY Tn1 SY Tn1+1

13

22

TC / TM

15

24

Cpt NTs ΔtSol Tbord NTb Δtb

TU_bord

29

14

## Fig 4

## Fig 5

## Fig 6

## Fig 7